# EUROPÄISCHE PATENTSCHRIFT

(11) **EP 0 961 027 B1**
(45) Veröffentlichungstag und Bekanntmachung des Hinweises auf die Patenterteilung: **21.11.2001**
(21) Anmeldenummer: 99118298.1
(22) Anmeldetag: 03.08.1995
(51) Int. Cl.: F02M 69/54

(54) **Druckregelventil**
Pressure control valve
Soupape de régulation de pression

(30) Priorität: 27.08.1994 DE 4430472
(43) Veröffentlichungstag der Anmeldung: 01.12.1999
(62) Teilanmeldung aus: 95926372.4
(73) Patentinhaber: ROBERT BOSCH GMBH, 70442 Stuttgart (DE)
(72) Erfinder: Liskow, Uwe, Dipl.-Ing., 74385 Pleidelsheim (DE); Kleppner, Stephan, Dipl.-Ing., 75015 Bretten (DE)

(56) Entgegenhaltungen:
- EP-A- 0 166 528
- US-A- 5 078 167
- US-A- 5 211 205

## Beschreibung

### Stand der Technik

Die Erfindung geht aus von einem Druckregelventil nach der Gattung des Patentanspruches 1. Es ist schon ein Druckregelventil bekannt (US-PS 5 078 167), das an einem Brennstoffilter einer Brennstoffversorgungsanlage für eine Brennkraftmaschine angeordnet ist und einen Grundkörper aufweist, in dessen mittlerem Bereich ein rohrförmiger Ventilsitzkörper mit einer Ventilsitzfläche befestigt ist. Zwischen dem Grundkörper und dem Ventilsitzkörper ist in ihrem mittleren Bereich eine Membran fest eingespannt, deren Umfang an einem Flansch des Grundkörpers eingespannt ist. In den Ventilsitzkörper ragt mit großem Spiel ein Brennstoffzuströmstutzen, der mit der Druckseite einer Brennstofförderpumpe verbunden ist. Der über den Brennstoffzuströmstutzen strömende Brennstoff gelangt teilweise in den Ventilsitzkörper und von diesem durch das Filtergewebe des Brennstoffilters und wirkt danach über eine Öffnung im Grundkörper auf eine Druckregelseite der Membran. Mit der der Druckregelseite der Membran abgewandten Rückströmseite der Membran ist ein Ventilschließkörper verbunden, der abgedichtet den Brennstoffzuströmstutzen umgibt und durch eine Bewegung der Membran auf diesem verschoben wird, um mehr oder weniger von der Ventilsitzfläche des Ventilsitzkörpers entgegen der Kraft einer an der Rückströmseite der Membran angreifenden Druckfeder abzuheben. Ein derartiges Druckregelventil ist sehr aufwendig gestaltet und besitzt aufgrund der durch die Abdichtung des Ventilschließkörpers am Brennstoffzuströmstutzen sich ergebende Reibung eine unerwünschte Hysterese und Regelungenauigkeit. Außerdem besitzt der Ventilschließkörper eine sehr große Masse, die durch die in ihrem mittleren Bereich und an ihrem Umfang gehäusefest an dem Grundkörper eingespannte Membran bewegt werden muß, wodurch ebenfalls die Reaktionsgeschwindigkeit des Druckregelventiles auf Druckänderungen beeinträchtigt wird.

Bekannt ist ebenfalls ein Druckregelventil (US-PS 4 300 510), das an einer Brennstoffverteilerleitung angeordnet ist. Dabei ist eine Membran des Druckregelventiles zwischen einem Ringflansch und einer Kappe an ihrem Umfang eingespannt und trägt in ihrem mittleren Bereich einen Ventilschließkörper, der mit einer ebenen Ventilsitzfläche an einem in die Brennstoffverteilerleitung hineinragenden Ventilsitzkörper zusammenwirkt. Auf der dem Ventilsitzkörper abgewandten Seite der Membran stützt sich eine Druckfeder ab, die andererseits an der Kappe anliegt. Auf die dem Ventilsitzkörper abgewandte Seite der Membran wirkt außerdem der in der Luftansaugleitung herrschende Druck der Brennkraftmaschine. Ein derartiges Druckregelventil hat den Nachteil, daß die durch die Membran zu bewegenden Massen noch relativ groß sind, wodurch die Reaktionsgeschwindigkeit bei Druckänderungen noch zu langsam ist.

In der nicht vorveröffentlichten EP-A-0 636 785 ist bereits ein Druckregelventil vorgeschlagen worden, das in einem Grundkörper ausgespannt eine Membran aufweist, die in ihrem mittleren Bereich ein Element mit einer Ventilsitzfläche trägt, die einen durch das Element und damit die Membran führenden Rückströmkanal umgibt. Auf das Element an der Membran ausgerichtet ist an dem Grundkörper ein Pfosten befestigt, der eine Lagerbohrung aufweist, in der eine als Ventilschließkörper dienende Kugel drehbar gelagert ist. Eine Druckfeder preßt das Element und damit die Ventilsitzfläche im geschlossenen Zustand des Druckregelventiles gegen eine Abflachung der Kugel. Die Lagerung der Kugel in dem Pfosten erfordert nicht nur ein zusätzliches Bauteil, sondern auch dessen zusätzliche Befestigung im Grundkörper, wozu zusätzlicher Bauraum und Aufwand erforderlich ist. Außerdem kommt es bei einer nicht ordnungsgemäßen Befestigung des Elementes zu Regelabweichungen. Bei einem weiteren Ausführungsbeispiel der EP-A-0 636 785 ist die als Ventilschließkörper dienende Kugel direkt in dem an der Membran befestigten Element drehbar gelagert und wirkt mit einer im Element vorgesehenen Ventilsitzfläche zusammen. Die Kugel ragt teilweise aus dem Element heraus und wird im geschlossenen Zustand des Druckregelventiles durch eine am Element angreifende Druckfeder gegen die Ventilsitzfläche und einen Vorsprung des Grundkörpers auf der Druckregelseite gepreßt.

Durch die JP-A-59170466 ist ein Druckregelventil bekannt, bei dem auf der Druckregelseite in einem Grundkörper ein Pfosten befestigt ist, an dem eine Kugel drehbar gelagert ist, die einen abgeflachten Ventilschließkörper trägt, der mit einer Ventilsitzfläche zusammenwirkt, die an einem mit der Membran verbundenen Element vorgesehen ist und einen Rückströmkanal zur Rückströmseite umgibt. Die Anordnung des Pfostens an dem Grundkörper bringt nicht nur zusätzlichen Befestigungsaufwand mit sich, sondern der Pfosten führt aufgrund seines Raumbedarfs zu einer unerwünschten Vergrößerung des Druckregelventiles. Ein nicht exakt befestigter Pfosten hat Regelungenauigkeiten zur Folge.

### Vorteile der Erfindung

Das erfindungsgemäße Druckregelventil mit den kennzeichnenden Merkmalen des Patentanspruches 1 hat demgegenüber den Vorteil, daß es ohne großen Aufwand auf einfache Art und Weise herstellbar ist, kompakt gebaut ist, genau den vorbestimmten Druck regelt und schneller auf Druckänderungen reagiert. Weiterhin ist das erfindungsgemäße Druckregelventil besonders geeignet zur Druckregelung in sogenannten "Returnless"-Brennstoffeinspritzsystemen, bei denen der durch die Brennstoffpumpe geförderte und nicht durch die Einspritzventile eingespritzte überschüssige Brennstoff unmittelbar stromabwärts der Brennstoffpumpe über das Druckregelventil wieder in den Brennstofftank zurückgeleitet wird. Die Hindurchführung des Rückströmkanales durch die Membran führt zu einer Verminderung der bewegten Massen und damit zu einer Verbesserung der Reaktionsgeschwindigkeit des Druckregelventiles. Die axiale Durchströmung bringt Einbauvorteile mit sich und ermöglicht eine bessere Integrierung in andere Aggregate.

Durch die in den abhängigen Patentansprüchen aufgeführten Maßnahmen sind vorteilhafte Weiterbildungen und Verbesserungen des im Patentanspruch 1 angegebenen Druckregelventiles möglich.

Vorteilhaft ist es, im mittleren Bereich der Membran einen Ventilsitzkörper vorzusehen, der die Ventilsitzfläche und einen von dieser zur Rückströmseite führenden Rückströmkanal aufweist.

Eine vorteilhafte Ausbildung besteht darin, daß der Grundkörper als topfförmiger Kunststoffkörper mit einem Boden ausgebildet ist, an dem integriert der Ventilschließkörper ausgebildet ist.

Vorteilhaft ist es ebenfalls, am Grundkörper einen hülsenförmigen Ventilschließkörper mit einer der Membran zugewandten Dichtfläche und einem der Membran abgewandten Hülsenboden vorzusehen und das eine Ende einer als Rückstellfeder dienenden Zugfeder an der Membran und das andere Ende der Zugfeder an dem Hülsenboden des hülsenförmigen Ventilschließkörpers zu befestigen.

### Zeichnung

Ausführungsbeispiele der Erfindung sind in der Zeichnung vereinfacht dargestellt und in der nachfolgenden Beschreibung näher erläutert. Es zeigen Figuren 1 bis 6 verschiedene Anordnungen von Druckregelventilen in Brennstoffversorgungsanlagen von Brennkraftmaschinen, Figur 7 ein erstes und zweites Ausführungsbeispiel eines erfindungsgemäßen Druckregelventiles, Figuren 8 und 9 ein drittes und ein viertes Ausführungsbeispiel eines erfindungsgemäßen Druckregelventiles.

### Beschreibung der Ausführungsbeispiele

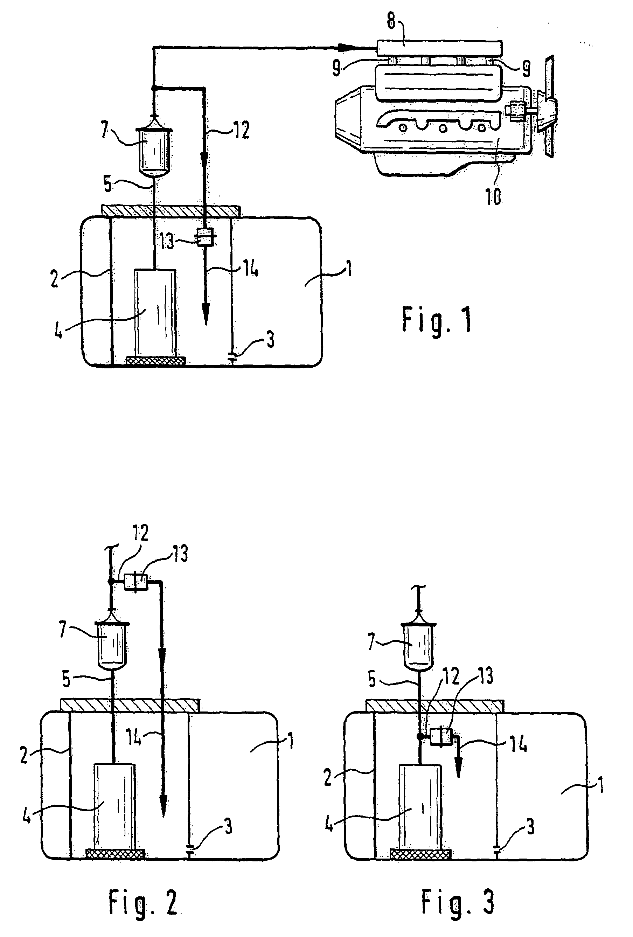

In der Figur 1 ist mit 1 ein Brennstofftank bezeichnet, in den eine sogenannte Tankeinbaueinheit 2 eingesetzt ist, die über eine Ausgleichsöffnung 3 in der Wandung der Tankeinbaueinheit aus dem Brennstofftank 1 mit Brennstoff versorgt wird. In der Tankeinbaueinheit 2 ist eine Brennstoffpumpe 4 angeordnet, die beispielsweise durch einen Elektromotor angetrieben wird und Brennstoff in eine Brennstoffleitung 5 nach außerhalb des Brennstofftanks 1 liefert. Bei dem in Figur 1 dargestellten Ausführungsbeispiel liegt außerhalb des Brennstofftanks 1 bzw. der Tankeinbaueinheit 2 in der Brennstoffleitung 5 ein Brennstoffilter 7. Die Brennstoffleitung 5 mündet in einen sogenannten Brennstoffverteiler 8, von dem aus der Brennstoff in Einspritzventile 9 gelangt, die in den Brennstoffverteiler eingesetzt sind und von denen beispielsweise vier dargestellt sind. Die Einspritzventile 9 sind mit ihren einspritzseitigen Enden in jeweils ein Einzelsaugrohr eines Zylinders einer gemischverdichtenden fremdgezündeten Brennkraftmaschine 10 eingesetzt und spritzen Brennstoff in unmittelbarer Nähe der Einlaßventile der einzelnen Zylinder ab. Stromabwärts des Brennstoffilters 7 zweigt von der Brennstoffleitung 5 eine Zweigleitung 12 ab, die zur Tankeinbaueinheit zurückführt. In der Zweigleitung 12 liegt innerhalb der Tankeinbaueinheit 2 ein Druckregelventil 13, das den Brennstoffdruck in der Brennstoffleitung 5 stromaufwärts der Einspritzventile 9 konstant hält und über das der durch die Brennstoffpumpe 4 geförderte und nicht durch die Einspritzventile 9 eingespritzte überschüssige Brennstoff in die Tankeinbaueinheit 2 zurückgeleitet wird. Dabei gelangt der durch das Druckregelventil 13 abgeregelte Brennstoff entweder unmittelbar aus dem Gehäuse des Druckregelventiles 13 in die Tankeinbaueinheit 2 oder strömt über eine stromabwärts des Druckregelventiles 13 vorgesehene Rückströmleitung 14 in die Tankeinbaueinheit 2.

Das Ausführungsbeispiel nach Figur 2 weicht von dem Ausführungsbeispiel nach Figur 1 lediglich dadurch ab, daß das Druckregelventil 13 in der Zweigleitung 12 außerhalb der Tankeinbaueinheit 2 und des Brennstofftanks 1 liegt.

Die Figur 3 zeigt ein Ausführungsbeispiel, bei dem zwar wie bei dem Ausführungsbeispiel nach Figur 1 das Druckregelventil 13 innerhalb der Tankeinbaueinheit 2 liegt, jedoch zweigt die Zweigleitung 12 bei diesem Ausführungsbeispiel nach Figur 3 bereits unmittelbar stromabwärts der Brennstoffpumpe 4 innerhalb der Tankeinbaueinheit 2 von der Brennstoffleitung 5 ab. Eine derartige Ausgestaltung, wie auch die nach Fig. 1 oder 2, wird "Returnless"-System genannt, da hierbei ohne lange Rückströmleitungen der von der Brennstoffpumpe 4 geförderte überschüssige Brennstoff, der nicht durch die Einspritzventile 9 abgespritzt wird, auf möglichst kurzem Wege, also ohne längere Leitungen und damit auch ohne eine unerwünschte Erwärmung im Motorraum in den Brennstofftank zurückgeleitet wird. Auch bei den Ausführungsbeispielen nach den Figuren 1 und 2 kann noch von einem "Returnless"-System gesprochen werden, da auch hierbei die Rückströmung des überschüssigen Brennstoffes in der Nähe des Brennstofftanks 1 erfolgt.

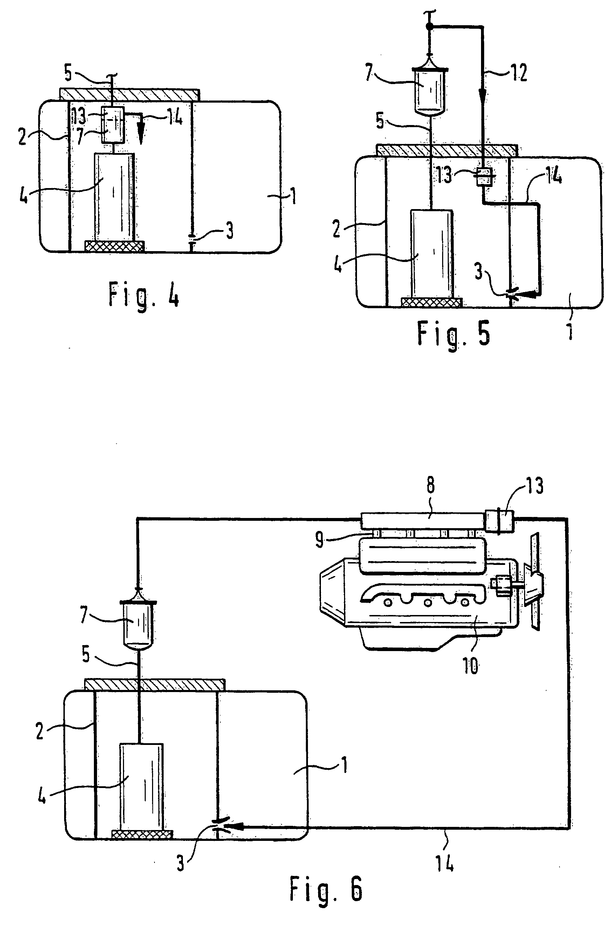

Die Figur 4 zeigt ebenfalls ein Ausführungsbeispiel einer als "Returnless"-System ausgebildeten Brennstoffversorgungsanlage, bei der unmittelbar stromabwärts der Brennstoffpumpe 4 innerhalb der Tankeinbaueinheit 2 auch der Brennstoffilter 7 angeordnet ist und an den Brennstoffilter 7 angebaut oder in den Brennstoffilter 7 integriert sowie innerhalb der Tankeinbaueinheit 2 liegend das Druckregelventil 13, so daß überschüssiger Brennstoff auf kürzestem Wege von der Brennstoffleitung 5 innerhalb der Tankeinbaueinheit 2 wieder auf die Saugseite der Brennstoffpumpe 4 zurückgeleitet wird.

Figur 5 zeigt ein Ausführungsbeispiel, bei dem ausgehend von dem Ausführungsbeispiel nach Figur 1 der von dem Druckregelventil 13 in die Rückströmleitung 14 abgeregelte überschüssige Brennstoff nicht direkt der Tankeinbaueinheit 2 zugeführt wird, sondern die Rückströmleitung 14 in einer als Strahlpumpe ausgebildeten Ausgleichsöffnung 3 endet, wie sie zur Befüllung derartiger Tankeinbaueinheiten bzw. an der Saugseite von Brennstoffpumpen bereits allgemein bekannt sind. Die in Figur 5 gezeigte Rückführung der Rückströmleitung 14 zu der Strahlpumpe 3 kann in entsprechender Weise auch bei den Ausführungsbeispielen nach den Figuren 2 bis 4 erfolgen.

Wie bei den bisherigen Ausführungsbeispielen, sind auch bei Figur 6 die gegenüber dem Ausführungsbeispiel nach Figur 1 gleichbleibenden und gleichwirkenden Teile durch die gleichen Bezugszeichen gekennzeichnet. In Figur 6 ist das Druckregelventil 13 stromabwärts des Brennstoffverteilers 8 angeordnet, vorzugsweise unmittelbar am Brennstoffverteiler 8, und die Rückströmleitung 14 vom Druckregelventil endet an der als Strahlpumpe ausgebildeten Ausgleichsöffnung 3 der Tankeinbaueinheit 2. Die Figuren 1 bis 6 zeigen nur einige der möglichen Anordnungen der in den folgenden Figuren beschriebenen Druckregelventile.

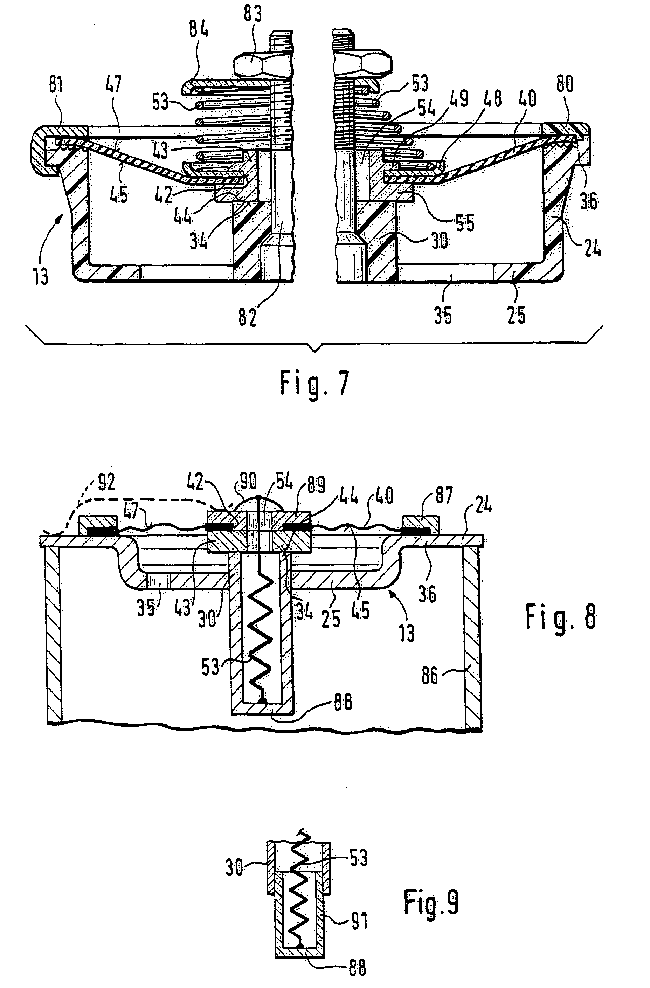

In der Figur 7 ist ein erstes und ein zweites Ausführungsbeispiel eines erfindungsgemäßen Druckregelventiles 13 dargestellt, das beispielsweise in nicht dargestellter Weise in einem aus einem Unterteil und einem Oberteil gebildeten Haltekörper angeordnet ist. Die Worte Oberteil und Unterteil werden hier nur zur besseren Unterscheidung zweier Teile verwendet. Das Oberteil und das Unterteil können beliebige Elemente verschiedener Aggregate sein. Unterteil und Oberteil umschließen eine sich in beide Teile erstreckende Aufnahmeöffnung, die an der Trennebene der beiden Teile durch eine Einspannöffnung mit einem größeren Durchmesser in wenigstens einem der Teile unterbrochen wird. Zwischen dem Unterteil und dem Oberteil kann in der Trennebene beispielsweise eine elastische Dichtung vorgesehen sein. Im Unterteil führt die Brennstoffleitung 5 in die Aufnahmeöffnung, während im Oberteil die Rückströmleitung 14 von der Aufnahmeöffnung fortführt. Der aus den beiden Teilen gebildete Trägerkörper kann als separates Teil ausgebildet sein, er kann jedoch auch Teil des Brennstofftanks 1, der Tankeinbaueinheit 2, der Brennstoffpumpe 4, des Brennstoffilters 7, des Brennstoffverteilers 8 oder eines anderen Aggregates der Brennstoffversorgungsanlage sein. Beim Einbau des Druckregelventils 13 innerhalb des Brennstofftanks 1 bzw. der Tankeinbaueinheit 2 kann auf ein geschlossenes Oberteil verzichtet werde, da der abgeregelte Brennstoff unmittelbar vom Druckregelventil in die Tankeinbaueinheit 2 bzw. den Brennstofftank 1 zurückströmen kann.

Das Druckregelventil 13 hat einen Grundkörper 24, der als topfförmiger Kunststoffkörper mit einem Boden 25 ausgebildet ist. Im Boden 25 sind Einströmöffnungen 35 vorgesehen, und im mittleren Bereich des Bodens ist als integraler Bestandteil ein Ventilschließkörper 30 erhaben ausgeführt, der eine ebene Dichtfläche 34 hat und in das Innere des Grundkörpers 24 ragt. An einem Kragen 36 des Grundkörpers 24 ist der Umfang einer Membran 40 entweder durch einen Einspannring 80 aus Kunststoff, wie er auf der rechten Seite der Figur 7 gezeigt ist, oder durch einen U-förmigen Spannring 81 aus Metall eingespannt, wie er als Variante auf der linken Seite der Figur 7 gezeigt ist. Der Einspannring 80 aus Kunststoff ist dabei vorzugsweise mittels Ultraschallschweißung mit dem Kragen 36 des Grundkörpers 24 verbunden. Im mittleren Bereich der Membran 40 ist durch einen Durchbruch 42 in der Membran ein Ventilsitzkörper 43 gesteckt und mittels eines Scheibenrandes 55 und einer Verformung 49 unter Zwischenlage eines Federtellers 48 mit der Membran 40 verbunden. Eine ebenfalls ebene Ventilsitzfläche 44 am Ventilsitzkörper 43 wirkt mit der ebenen Dichtfläche 34 des einteilig mit dem Grundkörper 24 ausgebildeten Ventilschließkörpers 30 zusammen. Im Ventilschließkörper 30 ist ein Stift 82 befestigt, der einen geringeren Querschnitt als ein durch den Ventilsitzkörper 43 hindurchgeführter Rückströmkanal 54 hat und diesen durchragt. Das dem Ventilschließkörper 30 abgewandte Ende des Stiftes 82 ist mit einem Außengewinde versehen, auf das eine Schraube 83 aufgeschraubt ist, an der sich eine Gegenlagerscheibe 84 abstützt. An der Gegenlagerscheibe 84 sowie dem gegenüberliegenden Federteller 48 liegt eine als Druckfeder ausgebildete Rückstellfeder 53 an, die entsprechend der Darstellung auf der linken Seite zylindrisch oder entsprechend der Darstellung auf der rechten Seite kegelförmig ausgebildet sein kann. Die Befestigung der Membran mit dem metallenen Spannring 81 erfolgt durch die auf die Membran 40 einwirkende Spannkraft des Spannringes 81 in Richtung des Kragens 36. Die Membran 40 hat eine dem Ventilschließkörper 30 zugewandte Druckregelseite 45 und eine dem Einspannring 80 bzw. dem Spannring 81 zugewandte Rückströmseite 47. Wird der vorbestimmte Brennstoffdruck auf der Druckregelseite 45 der Membran 40 überschritten, so hebt die Membran 40 den Ventilsitzkörper 43 vom Ventilschließkörper 30 ab und Brennstoff strömt entlang der Dichtfläche 34 sowie der Ventilsitzfläche 44 und von dort über den im Ventilsitzkörper 43 ausgebildeten Rückströmkanal 54 auf die Rückströmseite 47 der Membran. Über den Einspannring 80 bzw. den Spannring 81 kann der Brennstoff direkt in den Brennstofftank 1 bzw. die Tankeinbaueinheit 2 zurückströmen, wenn das Druckregelventil 13 dort eingebaut ist.

In Figur 8 ist mit den gleichen Bezugszeichen für gleiche und gleichwirkende Teile wie bei den vorhergehenden Ausführungsbeispielen versehen ein Druckregelventil 13 gezeigt, dessen topfförmig ausgebildeter und eine geringe axiale Höhe aufweisender Grundkörper 24 an einem rohrförmigen Aggregat 86 der Brennstoffversorgungsanlage, beispielsweise einem Brennstoffilter, angeordnet ist. Auf einem Kragen 36 des Grundkörpers 24 liegt der Umfang der nachgiebigen Membran 40 aus Gummi, beschichtetem Gewebe, Kunststoff oder Metall auf und ist daran mit einem mit dem Kragen 36 verbundenen Spannkörper 87 befestigt. Im mittleren Bereich des Bodens 25 des Grundkörpers 24 ist ein hülsenförmiger Ventilschließkörper 30 befestigt, dessen der Membran 40 zugewandte ringförmige Stirnfläche eine ebene Dichtfläche 34 bildet und dessen andere Stirnfläche außerhalb des Grundkörpers 24 liegt und durch einen Hülsenboden 88 verschlossen ist. Mit der Membran ist ein eine ebene Ventilsitzfläche 44 bildender Ventilsitzkörper 43 verbunden, indem er zwischen sich und einem auf der Rückströmseite 47 der Membran angeordneten Membranteller 89 den mittleren Bereich der Membran um den Durchbruch 42 einspannt. Von der Ventilsitzfläche 44 ausgehend führt durch den Ventilsitzkörper 43 und den Membranteller 89 der Rückströmkanal 54. Am Hülsenboden 88 greift das eine Ende einer sich durch den Ventilschließkörper 30 und den Rückströmkanal 54 erstreckenden Rückstellfeder 53 in Form einer Zugfeder an, deren anderes Ende an einem Federbügel 90 befestigt ist, der an den Membranteller 89 anliegt. Die Kraft der Rückstellfeder 53 kann beispielsweise durch Verbiegen des Federbügels 90, der beispielsweise Kreuz- oder Dreieckform haben kann, erfolgen. Eine andere Möglichkeit der Änderung der Kraft der Rückstellfeder 53 zeigt die Figur 9, bei der in oder auf dem Ventilschließkörper 30 eine Bodenhülse 91 verschiebbar oder verdrehbar gelagert ist, an der das eine Ende der Rückstellfeder 53 angreift. Nach erfolgter Einstellung der Federkraft der Rückstellfeder 53 werden der hülsenförmige Ventilschließkörper 30 und die Bodenhülse 91 miteinander kraft- oder formschlüssig verbunden. Eine weitere Möglichkeit der Einstellung der Rückstellkraft auf die Membran 40 zusätzlich zu der Rückstellfeder 53 ist in Figur 8 durch die gestrichelt dargestellte Zusatzfeder 92 angedeutet, die blattfederförmig ausgebildet ist und deren eines Ende am Grundkörper 24 befestigt ist, während das andere Ende am Membranteller 89 angreift. Durch Verbiegen der Zusatzfeder 92 kann in Addition mit der Kraft der Rückstellfeder 53 die gewünschte Rückstellkraft auf die Membran 40 eingestellt werden.

## Patentansprüche

1. Druckregelventil für Brennstoffversorgungsanlagen von Brennkraftmaschinen, mit einem Grundkörper (24), mit einer an ihrem Umfang an dem Grundkörper (24) eingespannten nachgiebigen Membran (40), die eine von dem zu regelnden Brennstoff beaufschlagte Druckregelseite (45) und dieser gegenüberliegend eine Rückströmseite (47) hat, mit einer im mittleren Bereich der Membran (40) liegenden Ventilsitzfläche (44), mit einem mit der Ventilsitzfläche (44) zusammenwirkenden Ventilschließkörper (30) und mit einer in Ventilschließrichtung wirkenden Rückstellfeder (53), wobei die Membran (40) relativ zu ihrem Umfang in ihrem mittleren Bereich mit der Ventilsitzfläche (44) auslenkbar ist und Brennstoff bei von dem Ventilschließkörper (30) abgehobener Ventilsitzfläche (44) über die Ventilsitzfläche (44) durch die Membrann (40) von der Druckregelseite (45) in Richtung zur Rückströmseite (47) der Membran (40) strömen kann, **dadurch gekennzeichnet, daß** die Federkraft der Rückstellfeder (53) an einem Ende der Rückstellfeder (53) an der Membran (40) und an einem anderen Ende der Rückstellfeder (53) durch die Membran (40) hindurchgeführt an dem Ventilschließkörper (30) angreift.

2. Druckregelventil nach Anspruch 1, **dadurch gekennzeichnet, daß** der Grundkörper (24) als topfförmiger Kunststoffkörper mit einem Boden (25) ausgebildet sowie in den Boden (25) der mit einer ebenen Dichtfläche (34) versehene Ventilschließkörper (30) integriert ist und mit der Membran (40) ein eine ebene Ventilsitzfläche (44) und einen von dieser zur Rückströmseite (47) führenden Rückströmkanal (54) aufweisender Ventilsitzkörper (43) verbunden ist.

3. Druckregelventil nach Anspruch 2, **dadurch gekennzeichnet, daß** an dem Ventilschließkörper (30) ein Stift (82) vorgesehen ist, der durch den Rückströmkanal (54) des Ventilsitzkörpers (43) ragt und an seinem freien Ende eine Gegenlagerscheibe (84) für eine die Membran (40) beaufschlagende Rückstellfeder (53) lagert.

4. Druckregelventil nach Anspruch 3, **dadurch gekennzeichnet, daß** der Stift (82) an seinem freien Ende mit einem Außengewinde versehen ist, auf das eine mit einem Innengewinde versehene Mutter (83) geschraubt ist, an der die Gegenlagerscheibe (84) anliegt und mittels der die Kraft der Rückstellfeder (53) auf die Membran (40) einstellbar ist.

5. Druckregelventil nach Anspruch 1, **dadurch gekennzeichnet, daß** der Grundkörper (24) topfförmig mit einem Boden (25) ausgebildet ist, an dem ein hülsenförmiger Ventilschließkörper (30) befestigt ist, dessen der Membran (40) zugewandte ringförmige Stirnfläche eine ebene Dichtfläche (34) bildet und dessen andere Stirnfläche durch einen Hülsenboden (88) verschlossen ist, wobei mit der Membran (40) ein eine ebene Ventilsitzfläche (44) sowie einen von dieser zur Rückströmseite (47) führenden Rückströmkanal (54) aufweisender Ventilsitzkörper (43) verbunden ist und eine Rückstellfeder (53) in Form einer Zugfeder am Hülsenboden (88) und am Ventilsitzkörper (43) angreift.

## Claims

1. A pressure control valve for fuel feed systems of internal combustion engines, with a body (24), with a flexible diaphragm (40), which is clamped at its circumference to the body (24) and has a pressure control side (45), on which the fuel to be controlled impinges, and a return flow side (47) opposite the former, with a valve seat surface (44) situated in the middle area of the diaphragm (40), with a valve closing body (30) interacting with the valve seat surface (44) and with a return spring (53) acting in the valve closing direction, the diaphragm (40) in its middle area with the valve seat surface (44) being displaceable relative to its circumference, and fuel being able to flow through the diaphragm (40) by way of the valve seat surface (44) from the pressure control side (45) towards the return flow side (47) of the diaphragm (40) when the valve seat surface (44) is lifted off from the valve closing body (30),
**characterized in that** at one end of the return spring (53) the spring force of the return spring (53) acts on the diaphragm (40) and, fed through the diaphragm (40), at another end of the return spring acts on the valve closing body (30).

2. The pressure control valve according to Claim 1, **characterized in that** the body (24) is designed as cupped plastic body with a base (25), and the valve closing body (30) provided with a plane seal face (34) is incorporated into the base (25), and a valve seat body (43) having a plane valve seat surface (44) and a return flow duct (54) leading from that surface to the return flow side (47) is connected to the diaphragm (40).

3. The pressure control valve according to Claim 2, **characterized in that** a pin (82) is provided on the valve closing body (30), which pin projects through the return flow duct (54) of the valve seat body (43) and at its free end supports a counter-support disc (84) for a return spring (53) acting upon the diaphragm (40).

4. The pressure control valve according to Claim 3, **characterized in that** the pin (82) is provided at its free end with an external thread, on to which a nut (83) provided with an internal thread is screwed, against which nut the counter-support disc (84) bears and by means of which the force of the return spring (53) acting on the diaphragm (40) can be adjusted.

5. The pressure control valve according to Claim 1, **characterized in that** the body (24) is of cupped design with a base (25), to which a sleeve-shaped valve closing body (30) is fixed, the annular face of which facing the diaphragm (40) forms a plane seal face (34) and the other face of which is sealed by a sleeve base (88), a valve seat body (43) having a plane valve seat surface (44) and a return flow duct (54) leading from the said surface to the return flow side (47) being connected to the diaphragm (40), and a return spring (53) in the form of an extension spring acting on the sleeve base (88) and on the valve seat body (43).

## Revendications

1. Soupape de régulation de pression pour des installations d'alimentation en carburant de moteurs à combustion interne comprenant
- un corps de base (24),
- une membrane souple (40) fixée par sa périphérie sur le corps de base (24), cette membrane ayant un côté de régulation de pression (45) sollicité par le carburant à réguler et de l'autre côté un côté de retour de carburant (47), avec une surface formant siège de soupape (44), dans la zone centrale de la membrane (40),
- un organe d'obturation de soupape (30), coopérant avec la surface formant siège de soupape (44), et un ressort de rappel (53) agissant dans le sens de fermeture de la soupape, dans laquelle la membrane (40) par rapport à sa périphérie, est articulée dans la zone centrale avec la surface formant siège de soupape (44) et lorsque la surface formant siège de soupape (44) est soulevée par rapport à l'organe d'obturation (30), le carburant peut passer par la surface formant siège de soupape (44) à travers la membrane (40), du côté de régulation de pression (45) en direction du côté de retour (47) de la membrane (40),
**caractérisée en ce que**
la force du ressort de rappel (53) est appliquée par une extrémité du ressort (53) contre la membrane (40) et par l'autre extrémité du ressort (53), à travers la membrane (40) à l'organe d'obturation de soupape (30).

2. Soupape de régulation de pression selon la revendication 1,
**caractérisée en ce que**
le corps de base (24) est une pièce en matière plastique en forme de pot avec un fond (25) et l'organe d'obturation de soupape (30) muni d'une surface d'étanchéité plane (34) est intégré dans le fond (25) et un organe formant siège de soupape (43) ayant une surface de siège de soupape plane (44) et un canal de rétour (54) partant de cette surface vers le côté de retour (47) est relié à la membrane (40).

3. Soupape de régulation de pression selon la revendication 2,
**caractérisée en ce qu'**
une tige (82) est prévue sur l'organe d'obturation de soupape (30), cette tige traverse le canal de retour (54) de l'organe formant siège de soupape (43) et par son extrémité libre il porte une rondelle d'appui (84) pour un ressort de rappel (53) sollicitant la membrane (40).

4. Soupape de régulation de pression selon la revendication 3,
**caractérisée en ce que**
la tige (82) comporté un filetage extérieur à son extrémité libre pour recevoir un écrou (83) muni d'un filetage intérieur, cet écrou s'appuyant contre la rondelle d'appui (84) et permet de régler la force exercée par le ressort de rappel (53) sur la membrane (40).

5. Soupape de régulation de pression selon la revendication 1,
**caractérisée en ce que**
le corps de base (24) est en forme de pot avec un fond (25) auquel est fixé un organe d'obturation de soupape (30) en tonne de manchon dont la surface frontale annulaire tournée vers la membrane (40) forme une surface d'étanchéité plane (34) et dont l'autre surface annulaire est fermée par un fond de manchon (88), et à la membrane (40) est relié un corps formant siège de soupape (43) ayant une surface de siège de soupape plane (44) et un canal de retour (54) partant de celle-ci et arrivant du côté de retour (47), et un ressort de rappel (53) en forme de ressort de traction agit sur le fond de manchon (88) et sur le corps formant siège de soupape (43).
